# FASCICULE DE BREVET EUROPEEN

(11) **EP 2 222 560 B1**
(45) Date de publication et mention de la délivrance du brevet: **30.11.2011**
(21) Numéro de dépôt: 08864291.3
(22) Date de dépôt: 10.09.2008
(51) Int. Cl.: B64D 29/08, B64C 7/02, F02C 7/04, B64D 33/02

(54) **INSTALLATION DE SYSTEME DE GUIDAGE SUR UNE NACELLE D'AERONEF**
ANLAGE FÜR EINE FLUGZEUGGONDELFÜHRUNGSSYSTEM
AIRCRAFT NACELLE GUIDANCE SYSTEM INSTALLATION

(30) Priorité: 26.12.2007 FR 0709105
(43) Date de publication de la demande: 01.09.2010
(73) Titulaire: Aircelle, 76700 Gonfreville L'Orcher (FR)
(72) Inventeur: VAUCHEL, Guy, Bernard, F-76600 Le Havre (FR); DAUGUET, Jean-Philippe, F-31170 Tournefeuille (FR); BEILLIARD, Stéphane, F-31300 Toulouse (FR)
(74) Mandataire: Gaillarde, Frédéric F. Ch.
(86) Numéro de dépôt international: PCT/FR2008/001262
(87) Numéro de publication internationale: WO 2009/080904

(56) Documents cités:
- FR-A- 2 757 823
- GB-A- 2 274 490
- US-B1- 6 340 135

## Description

La présente invention se rapporte à une nacelle pour turboréacteur comprenant une structure d'entrée d'air apte à canaliser un flux d'air vers une soufflante du turboréacteur et une structure médiane destinée à entourer ladite soufflante et à laquelle est rattachée la structure d'entrée d'air.

D'une façon générale, une nacelle d'aéronef présente une structure comprenant une structure d'entrée d'air, une structure médiane et une section aval. On entend ici par le terme « aval » la direction correspondant au sens du flux d'air froid pénétrant dans le turboréacteur. Le terme « amont » désigne la direction opposée.

La structure d'entrée d'air est située en amont du turboréacteur servant à propulser l'aéronef. En aval de la structure d'entrée d'air, la structure médiane est destinée à entourer une soufflante du turboréacteur. Plus en aval encore se situe la section aval abritant en général des moyens d'inversion de poussée destinés à entourer la chambre de combustion du turboréacteur. La nacelle se termine par une tuyère d'éjection dont la sortie est située en aval du turboréacteur.

La structure d'entrée d'air comprend, d'une part, une lèvre d'entrée d'air et d'autre part, une structure aval sur laquelle est rapportée la lèvre. La lèvre d'entrée d'air est adaptée pour permettre la captation optimale vers le turboréacteur de l'air nécessaire à l'alimentation de la soufflante et des compresseurs internes du turboréacteur. La structure aval, quant à elle, est destinée à canaliser convenablement l'air vers les aubes de la soufflante. Cette structure aval comporte généralement un panneau externe et un panneau interne. Le panneau interne comporte une virole acoustique permettant d'atténuer les bruits engendrés par le turboréacteur ainsi que les vibrations des structures. La structure aval ainsi que la lèvre d'entrée d'air sont rattachées en amont d'un carter de la soufflante appartenant à la structure médiane de la nacelle.

Selon les conditions de température et d'humidité relative au sol ou en vol, du givre peut se déposer sur le profil de la lèvre, notamment au niveau du profil intérieur. Cette formation de givre peut être dangereuse pour le fonctionnement mécanique des parties fixes et tournantes du turboréacteur et occasionner une diminution des performances. Des systèmes de dégivrage de cette partie de la lèvre d'entrée d'air ont donc été mis au point pour remédier à ce problème. On peut notamment citer les documents US 4 688 757 et EP 1 495 963.

Actuellement, les opérations de maintenance sur ces équipements logés à l'intérieur de la structure d'entrée d'air obligent les constructeurs à prévoir des trappes d'accès à ces différents équipements. Cependant ces trappes ne sont pas toujours suffisantes, nécessitant parfois de visiter les équipements internes de la structure d'entrée d'air à l'aide d'outils spécifiques, tels qu'un endoscope. De tels outils spécifiques ne donnent pas toujours entière satisfaction au niveau du contrôle de ces équipements.

Par ailleurs, pour remplacer une partie des équipements internes, il est en général nécessaire de déposer la totalité de la structure d'entrée d'air. Une telle dépose requiert un outillage important et entraîne une immobilisation de l'ensemble propulsif et donc généralement de l'avion.

Dans la demande de brevet FR 06/08599, on propose une structure d'entrée d'air formée par le panneau externe fixé à la lèvre d'entrée d'air et au moins un panneau interne fixé au carter d'une structure médiane. La structure d'entrée d'air est mobile en translation par rapport à la structure médiane au moyen d'un système de rails fixés sur la virole acoustique. Un agencement similaire est également connu à partir du document GB-A-2274490.

Une telle structure d'entrée d'air présente l'inconvénient de diminuer la surface acoustique efficace de la virole acoustique. De plus, en position d'ouverture, le système de rails ne permet pas un recul suffisant de la structure d'entrée d'air pour atteindre les pièces situées à l'intérieur de l'entrée d'air et qui sont difficiles d'accès.

On entend ici par « position d'ouverture » la configuration dans laquelle la structure d'entrée d'air est translatée vers l'amont. La position d'ouverture correspond à une configuration où l'aéronef est au sol pour réaliser une maintenance.

On entend ici par « position de fermeture » la configuration dans laquelle la lèvre d'entrée d'air est rattachée à l'extrémité amont du ou des panneaux internes. La position de fermeture correspond à une configuration où l'aéronef est apte à voler.

Un but de la présente invention est donc de fournir une nacelle permettant une maintenance plus aisée tout en gardant une surface acoustique efficace importante.

A cet effet, selon un premier aspect, l'invention a pour objet une nacelle pour turboréacteur comprenant :
- une structure d'entrée d'air apte à canaliser un flux d'air vers une soufflante du turboréacteur et comprenant au moins un panneau externe longitudinal intégrant une lèvre d'entrée d'air,
- une structure médiane destinée à entourer ladite soufflante et à laquelle est rattachée la structure d'entrée d'air de manière à assurer une continuité aérodynamique,
- au moins un panneau interne comprenant une virole acoustique, fixée à son extrémité aval à une extrémité amont de la structure médiane formant avec cette dernière une structure fixe de la nacelle, et
- des moyens de guidage du ou des panneaux externes aptes à permettre un déplacement sensiblement rectiligne du panneau externe vers l'amont de la nacelle de manière à pouvoir ouvrir la structure d'entrée d'air,
caractérisée en ce que les moyens de guidage sont entièrement fixés sur la structure médiane.

En premier lieu, les moyens de guidage étant fixés en aval du ou des panneaux internes, le ou les panneaux externes sont translatés sur une longueur plus grande que dans le cas de la demande de brevet FR 06/08599 engendrant une ouverture plus importante en position d'ouverture. Ainsi, pour chaque maintenance, la structure d'entrée d'air translate par rapport à la structure médiane vers l'amont de la nacelle de sorte à permettre un accès aisé aux pièces situées à l'intérieur de la structure d'entrée d'air (moyens de dégivrage... ).

En deuxième lieu, la nacelle selon l'invention comporte des moyens de guidage qui ne sont pas fixés sur la virole acoustique. Ainsi, sensiblement toute la surface acoustique de cette virole peut être utilisée pour atténuer les bruits générés par le turboréacteur ainsi que les vibrations des structures.

En troisième lieu, la nacelle selon l'invention permet de démonter la virole acoustique sans modifier le placement des moyens de guidage. Ainsi lors de chaque changement de virole acoustique, il n'est pas nécessaire de repositionner de manière précise les moyens de guidage sur le panneau externe ou sur la structure médiane.

Selon d'autres caractéristiques de l'invention, la structure selon l'invention comporte l'une ou plusieurs des caractéristiques optionnelles suivantes considérées seules ou selon toutes les combinaisons possibles:
- les moyens de guidage sont fixés sur un carter de la structure médiane, ledit carter étant destiné à entourer la soufflante et à assurer la continuité aérodynamique avec le panneau interne ;
- l'extrémité amont du carter comporte une pluralité d'orifices pour adapter la fixation des moyens de guidage selon le positionnement desdits moyens de guidage, ce qui permet d'adapter la fixation des moyens de guidage sur le carter en fonction de la position optimale des moyens de guidage ;
- les moyens de guidage comprennent au moins un système de rails et des moyens de montage du ou des panneaux externes sur le ou les système(s) de rails, ce qui permet un déplacement aisé du ou des panneaux externes et assure également une tenue structurale de la structure médiane ;
- au moins une partie des moyens de montage est située en aval de la zone de jonction de la structure médiane et d'un ou de plusieurs panneaux internes, en position de fermeture, ce qui permet un meilleur dégagement car les moyens de montage entraînent le ou les panneaux externes sur une distance plus importante ;
- les moyens de montage comprennent au moins un coulisseau apte à coopérer avec au moins un rail correspondant ;
- les moyens de montage comprennent au moins un système de patins à rouleaux aptes à coopérer avec un rail correspondant ;
- les moyens de montage comprennent un système de glissière apte à coopérer avec au moins un rail en rigole correspondant ;
- les moyens de guidage comportent un évidement sensiblement transversal par rapport à l'axe de la nacelle, ledit évidement étant situé en aval du ou des panneau(x) interne(s), ce qui permet d'amener, par exemple, des éléments du moteur type tuyauterie et câblage de manière plus aisée ;
- au moins un panneau externe présente un cadre avant apte à être rattaché à une cloison solidaire d'une partie fixée sur la structure médiane, ce qui permet de rattacher de manière solide le ou les panneaux externes à la structure médiane fixe lorsque la nacelle n'est pas en maintenance sans transpercer la virole acoustique pour fixer les moyens de fixation ;
- la cloison comporte une ouverture configurée pour que les moyens de guidage traversent ladite ouverture, ce qui permet ainsi d'augmenter le dégagement de la structure d'entrée d'air puisque les moyens de guidage occupent une distance correspondant à la longueur de la structure médiane et à celle du panneau interne ;
- la cloison comporte un évidement de forme complémentaire à au moins une partie des moyens de montage pour que, en position de fermeture, les moyens de montage assurent l'étanchéité de la cloison ;
- la structure d'entrée d'air comprend des moyens d'accompagnement mécaniques ou manuels d'au moins un panneau externe le long des moyens de guidage, ce qui permet d'ouvrir de l'extérieur de manière simple la structure d'entrée d'air ;
- les moyens de guidage comportent au moins un moyen de butée d'au moins un panneau externe apte à permettre une ouverture partielle dudit ou desdits panneaux externes, ce qui permet d'éviter la dépose complète de la structure d'entrée d'air si cela n'est pas souhaité ;
- la structure médiane comprend des moyens de centrage et de positionnement des moyens de guidage, ce qui permet de donner aux moyens de guidage un positionnement optimal ;
- la structure d'entrée d'air comprend des équipements de dégivrage de la structure d'entrée d'air.

L'invention sera davantage comprise à la lecture de la description non limitative qui va suivre, faite en référence aux figures ci-annexées.
- La figure 1 une représentation schématique d'une nacelle selon l'invention présentant une structure d'entrée d'air comprenant une lèvre intégrée aux panneaux externes.
- La figure 2 est une représentation schématique en coupe longitudinale d'un premier mode de réalisation de la structure d'entrée d'air de la figure 1 en position de fermeture.
- La figure 3 est une représentation schématique en coupe longitudinale du mode de réalisation de la figure 2 en position d'ouverture.
- La figue 4 est une représentation schématique partielle en coupe longitudinale de d'une variante du mode de réalisation de la figure 2.
- La figure 5 est une représentation schématique partielle en coupe longitudinale du mode de réalisation de la figure 4
- La figure 6 à 8 sont des variantes du mode de réalisation de la figure 2.
- Les figures 9 à 11 sont des représentations schématiques agrandies de la zone de jonction entre un panneau externe intégrant une lèvre d'entrée d'air et un panneau interne.
- La figure 12 est un agrandissement de la zone XII de la figure 2.
- La figure 13 est un agrandissement de la zone XIII de la figure 2.
- La figure 14 est une représentation schématique en coupe longitudinale d'une variante du mode de réalisation de la figure 2.
- La figure 15 est un agrandisssement de la coupe transversale XV de la figure 14.

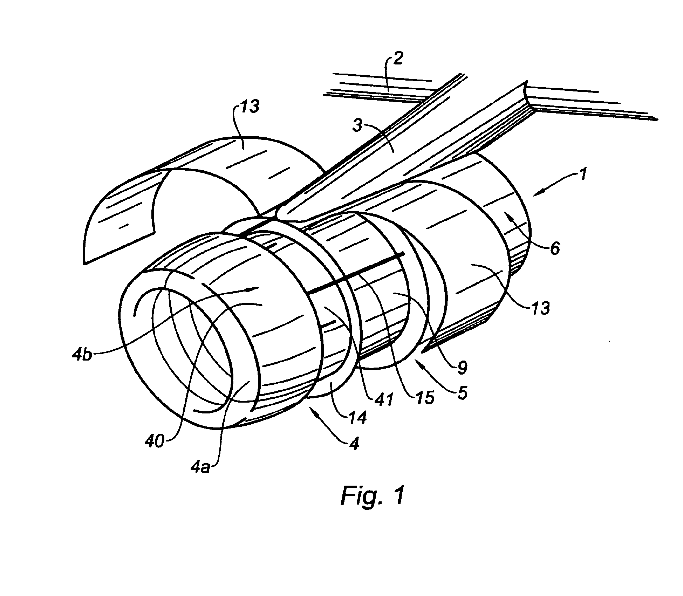

Une nacelle 1 selon l'invention telle que représentée sur la figure 1 constitue un logement tubulaire pour un turboréacteur (non visible) dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur ainsi que des systèmes annexes tels qu'un inverseur de poussée.

La nacelle 1 est destinée à être rattachée à une structure fixe d'un avion, telle qu'une aile 2, par l'intermédiaire d'un pylône 3.

Plus précisément, la nacelle 1 possède une structure comprenant une structure d'entrée d'air 4 en amont, une structure médiane 5 entourant une soufflante (non visible) du turboréacteur, et une section aval 6 entourant le turboréacteur et abritant généralement un système d'inversion de poussée (non représenté).

La structure d'entrée d'air 4 se divise en deux zones. La première zone est une lèvre d'entrée 4a adaptée pour permettre la captation optimale vers le turboréacteur de l'air nécessaire à l'alimentation de la soufflante et des compresseurs internes du turboréacteur. La seconde zone est une section 4b plus en aval que la lèvre d'entrée 4a comprenant au moins un panneau externe 40. Selon l'invention, la lèvre 4a est intégrée au(x) panneau(x) externe(s) 40 de manière à former une pièce unique démontable.

La structure d'entrée d'air 4 peut être modulaire et comprendre une pluralité de panneaux externes 40 définissant chacun une portion de lèvre d'entrée d'air 4a correspondante. Dans ce cas, la structure d'entrée d'air 4 présentera des lignes de jonction qui s'étendent longitudinalement par rapport à la nacelle 1. Lesdites lignes n'ont généralement qu'une incidence négligeable sur la continuité aérodynamique de la structure d'entrée d'air 4 contrairement à une nacelle de l'art antérieur présentant une ligne de jonction périphérique entre le panneau externe 40 et la lèvre 4a. Ladite ligne de jonction est usuellement située transversalement par rapport au sens d'écoulement de l'air.

La nacelle 1 selon l'invention comprend également une structure médiane 5 comportant un carter 9. La structure médiane 5 est rattachée à la structure d'entrée d'air 4 de manière à assurer une continuité aérodynamique.

Au moins un panneau interne 41 prolonge la lèvre d'entrée d'air 4a. Le ou les panneaux internes 41 est(sont) destiné(s) à canaliser convenablement l'air vers les aubes (non représentées) de la soufflante. Le ou les panneaux internes 41 est(sont) fixé(s) à leur extrémité aval à une extrémité amont de la structure médiane 5, notamment au niveau du carter 9, par l'intermédiaire de brides de fixation. Ainsi, le ou les panneaux internes 41 forme(nt) avec la structure médiane 5 une structure fixe par rapport à la nacelle 1 de l'invention. Par ailleurs, le ou les panneaux internes 41 comprend(comprennent) une virole acoustique destinée à atténuer les nuisances sonores dues au fonctionnement du turboréacteur et aux vibrations de la structure. La virole acoustique peut être constituée d'une structure en nid d'abeille ou de toute autre structure permettant d'atténuer les nuisances sonores.

La nacelle 1 de l'invention comprend également des moyens de guidage 15 du ou des panneaux externes 40 aptes à permettre un déplacement sensiblement rectiligne du ou des panneaux externes 40 vers l'amont de la nacelle 1 de manière à pouvoir ouvrir la structure d'entrée d'air (voir figure 1). Les moyens de guidage 15 sont entièrement fixés de manière amovible sur la structure médiane 5. Autrement dit, aucune partie de la virole acoustique n'est obstruée pour permettre la fixation des moyens de guidage 15 sur la virole acoustique. De ce fait, sensiblement toute la surface acoustique de la virole est utilisable pour atténuer les nuisances sonores.

De façon avantageuse, la structure d'entrée d'air 4 comprend des moyens de montage non représentés, mécaniques ou manuels, d'au moins un panneau externe 40 le long des moyens de guidage 15. Ces moyens de montage peuvent être disposés, par exemple, sur la face extérieure ou sur une face latérale du ou des panneaux externes 40 afin de simplifier l'ouverture de la structure d'entrée d'air 4 de l'extérieur de la nacelle 1 de l'invention. Avantageusement, l'ouverture dudit panneau externe 40 ne peut s'effectuer qu'après ouverture de capots 13 latéraux équipant la structure médiane 5. Ainsi, tout risque d'ouverture intempestif de la structure d'entrée d'air 4, notamment durant la phase de vol de l'aéronef, est écarté.

La figure 1 illustre une structure d'entrée d'air 4 avec un panneau externe 40 en position d'ouverture partielle laissant apparaître un panneau interne 41. En position d'ouverture complète, la structure d'entrée d'air 4 laisse apparaître sensiblement la totalité du panneau interne 41. De préférence, les moyens de guidage 15 comportent au moins un moyen de butée (non représenté) d'au moins un panneau externe 40 apte à permettre une ouverture partielle de ce dernier. Ainsi, il est possible de ne pas procéder à la dépose complète de la structure d'entrée d'air 4 à chaque maintenance. Le moyen de butée peut être réglable afin d'ajuster la longueur de recul de la structure d'entrée d'air 4 ce qui permet d'obtenir une ouverture plus ou moins grande selon le type d'intervention de maintenance souhaité.

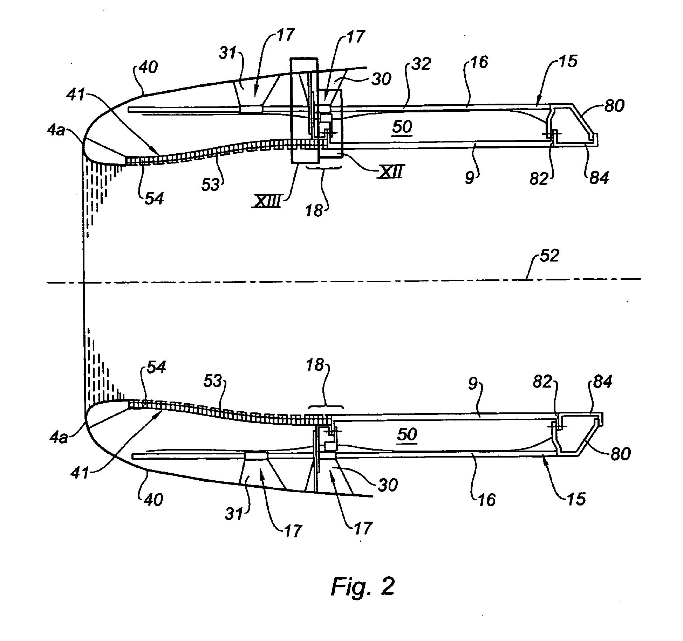

Le mode de réalisation représenté à la figure 2 correspond à une nacelle 1 selon l'invention en position de fermeture.

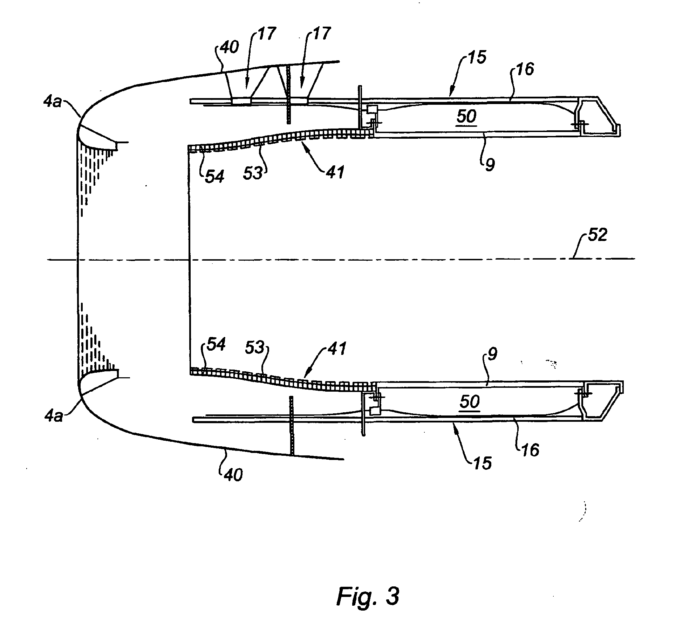

Le mode de réalisation représenté à la figure 3 correspond au mode de réalisation de la figure 2 en position d'ouverture partielle.

Selon le mode de réalisation représenté à la figure 2, les moyens de guidage 15 comprennent un système de rails 16 et des moyens de montage 17 mobiles du panneau externe 40 sur le système de rails 16. La forme allongée du système de rails 16 permet d'assurer une fonction de liaison sur la structure médiane 5.

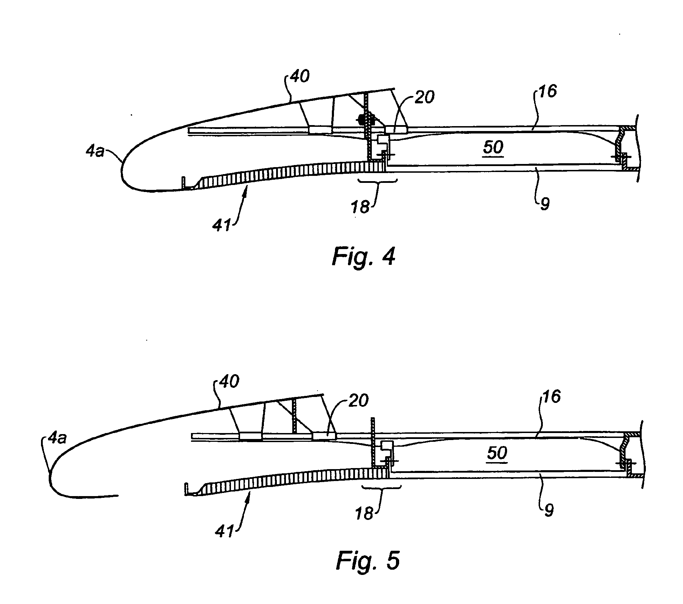

Selon le mode de réalisation préférentiel représenté à la figure 4, la structure d'entrée d'air 4 de l'invention est en position de fermeture. Selon ce mode de réalisation, au moins une partie 20 des moyens de montage 17 est située en aval de la zone de jonction 18 de la structure médiane 5 et du panneau interne 41. Comme représenté sur la figure 5, en position d'ouverture, une telle configuration permet d'entraîner le panneau externe 40 sur une distance supérieure ou égale à la somme de la longueur de la zone de jonction 18 et de la longueur du panneau interne 41. De ce fait, la distance parcourue par le panneau externe 40 est plus importante que celle de la demande de brevet FR 06/08599 tout en maintenant sensiblement la totalité de la surface acoustique efficace nécessaire à l'atténuation sonore.

Les moyens de montage 17 ainsi que le système de rails 16 peuvent avoir n'importe quelles formes aptes à permettre un déplacement longitudinal des moyens de montage 17 par rapport au système de rails 16.

Le mode de réalisation représenté à la figure 2 illustre deux coulisseaux 30 et 31 aptes à coulisser de manière longitudinale sur le rail 32 par rapport à l'axe de la nacelle 1 selon l'invention. Les coulisseaux 30 et 31 sont reliés à une de leurs extrémités au panneau externe 40 de sorte à entraîner ce dernier en translation. Selon une variante, les moyens de montage 17 sont constitués d'un ou de plusieurs, non nécessairement deux, coulisseaux.

Afin de diminuer les effets de coincement, les coulisseaux 30 et 31 peuvent entourer partiellement le rail 32.

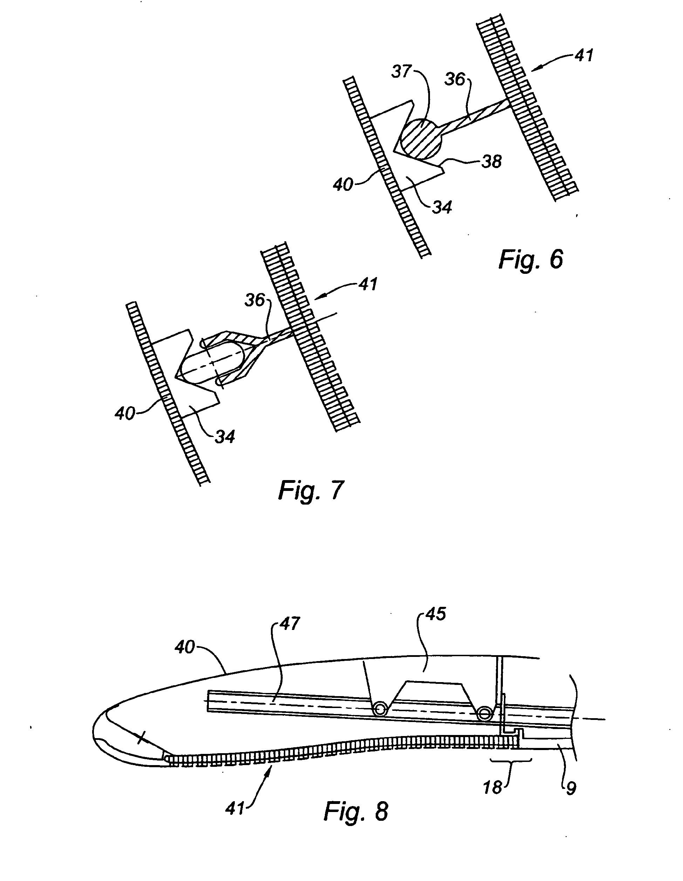

Selon une variante intéressante représentée aux figures 6 et 7, le système de rails 16 comporte un rail en rigole 34 apte à coopérer avec un système de glissière 36.

Selon un mode de réalisation, le rail en rigole 34 a une section transversale de forme différente, notamment circulaire, triangulaire ou autre. Le système de glissière 36 comporte une extrémité de forme complémentaire (figure 7) ou de forme minimisant les frottements (figure 6). Ainsi, par exemple, comme représenté à la figure 6, le système de glissière 36 comporte une extrémité circulaire 37 venant en contact sur la surface 38 du rail de section triangulaire.

Selon le mode de réalisation représenté à la figure 8, les moyens de montage 17 comprennent au moins un système de patins 45 à rouleaux aptes à coopérer avec un rail 47 correspondant. Les roues du système de patins 45 permettent de limiter les frottements avec le rail 47 tout en assurant un déplacement efficace du panneau externe 40.

Selon une autre variante intéressante, les moyens de montage 17 comprennent au moins un axe longitudinal apte à coulisser à travers une ouverture correspondante. A tire d'exemple, l'ouverture peut par être réalisée au travers de moyens de fixation du panneau externe 40 sur la structure médiane 5 ou sur un guide support fixé sur la structure médiane 5.

Selon un mode de réalisation préférentiel représenté aux figures 2 et 3, les moyens de guidage 15 comportent un évidement 50 sensiblement transversal par rapport à l'axe 52 de la nacelle 1 de l'invention, ledit évidement 50 étant situé en aval du panneau interne 41. Ainsi, l'évidement 50 permet d'amener, par exemple, des éléments du moteur type tuyauterie et câblage de manière plus aisée tout en permettant le déplacement de la structure d'entrée d'air 4.

D'une manière préférée, La structure médiane 5 comprend des moyens de centrage et de positionnement (non représentés) permettant d'optimiser le positionnement des moyens de guidage 15 à l'intérieur de la nacelle 1 de l'invention. Ainsi, dans le cas où il s'avère nécessaire de démonter les moyens de guidage 15, le repositionnement ultérieur de ces derniers est effectué de manière rapide et précise grâce à ces moyens de centrage et de positionnement.

Selon le mode de réalisation représenté à la figure 2, le panneau interne 41 comporte une virole acoustique 53.

Le changement du panneau interne 41, notamment de la virole acoustique 53, ne nécessite pas de démonter les moyens de guidage 15. Ainsi, avantageusement, l'étape de remontage supplémentaire des moyens de guidage 15 qui nécessite un positionnement précis est écartée lors de chaque changement du panneau interne 41.

Selon le mode de réalisation représenté, la position de fermeture de la structure d'entrée d'air 4 implique que la virole acoustique 53 soit fixée à son extrémité amont 54 à la lèvre d'entrée d'air 4a par des moyens de fixations (non représentés) tels que des boulons. Ladite fixation est réalisée de manière à ce que le panneau interne 41 soit en contact permanent avec la lèvre d'entrée d'air 4a lorsque l'aéronef est en fonctionnement, notamment en vol.

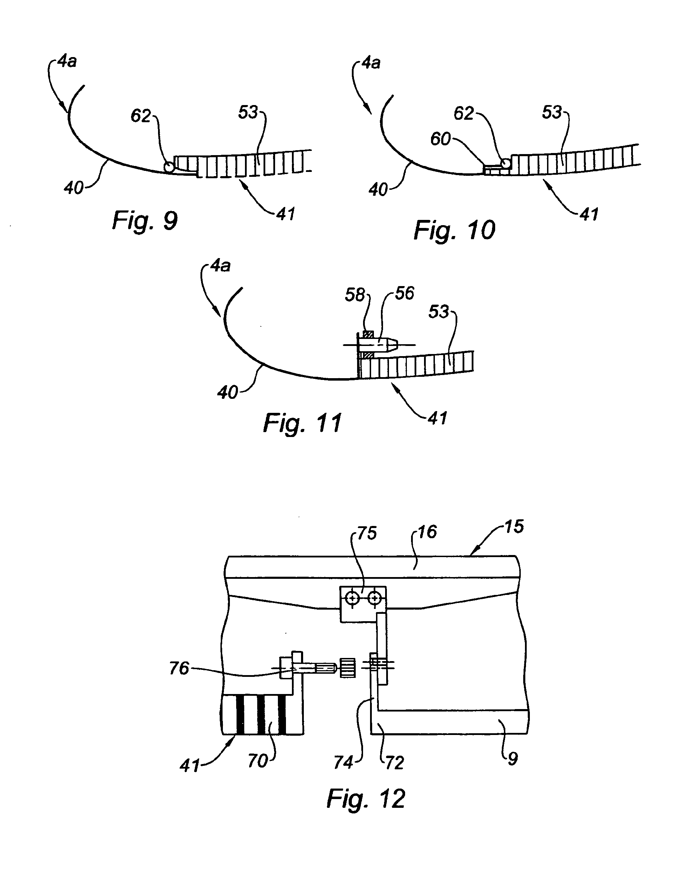

De manière avantageuse, la lèvre d'entrée d'air 4a intégrée au panneau externe 40 assure la continuité aérodynamique avec la virole acoustique 53. Différents systèmes d'alignement sont représentés à titre d'exemple sur les figures 9 à 11.

L'interface entre la lèvre d'entrée d'air 4a intégrée au panneau externe 40 et la virole acoustique 53 du panneau interne peut être elle-même externe (figures 9 et 10) ou interne (figure 11) mais doit assurer une continuité aérodynamique la plus pure possible. Des moyens de centrage rigides, tels que des pions de centrage 56 (figure 11) aptes à coopérer avec des alésages 58 correspondants, ou souples, tel qu'une languette élastique 60 (figure 9), assurent cette continuité structurelle.

Un joint d'étanchéité 62 peut être indifféremment disposé à l'interface sur l'un ou l'autre panneau interne 41 ou externe 40.

Selon les modes de réalisation représentés sur les figures 9 et 10, la lèvre 4a et le panneau interne 41 présentent une interface au niveau de laquelle ladite lèvre 4a et ledit panneau interne 41 se chevauchent partiellement lorsqu'en position de fermeture. Avantageusement, l'interface présente un point amont formant butée assurant ainsi une solidité de la zone de fixation.

Ces systèmes doivent permettre d'assurer un jeu minimum entre la virole acoustique 53 et la lèvre d'entrée d'air 4a de manière à ce que cette jonction crée une perturbation aérodynamique la plus minime possible.

Comme représenté à la figure 12, le panneau interne 41 est fixé à son extrémité aval 70 à une extrémité amont 72 du carter 9 formant avec ce dernier une partie fixe de la nacelle 1 de l'invention.

Pour cela, le carter 9 comporte à son extrémité amont 72 une bride 74 sur laquelle se fixe l'extrémité aval 70 du panneau interne 41 et les moyens de fixation 75 des moyens de guidage 15, notamment du système de rails 16. L'extrémité aval 70 du panneau interne 41 peut être fixé par un système simple ou double attache,d'un côté ou de l'autre de la bride 74 du carter 9. Selon un mode de réalisation, l'extrémité aval 70 et les moyens de fixation 75 ne sont pas fixés sur le carter 9 au même endroit. Ainsi, de préférence, le carter 9 comporte à son extrémité amont 72 une pluralité d'orifices pour adapter la fixation du système de rails 16 selon le positionnement de ces derniers.

L'extrémité aval 70 et les moyens de fixation 75 sont par exemple rattachés par un ou plusieurs boulons 76 au carter 9, comme représenté à la figure 12.

Il est également possible d'utiliser des ferrures d'adaptation pour effectuer l'interface entre le système de rails 16 et le positionnement optimal des trous de la bride 74 du carter.

Par ailleurs, selon le mode de réalisation représenté à la figure 2, le système de rails 16 est monté à son extrémité aval par des moyens de fixation 80 à l'extrémité aval 82 du carter 9. Les moyens de fixation 80 sont par exemple une ferrure. L'extrémité aval 82 du carter 9 est notamment fixé à une bride 84. Selon une variante, le système de rails 16 est rattaché au carter 9 entre l'extrémité amont 72 et aval 82, par exemple sur une bride ou une ferrure rapportée.

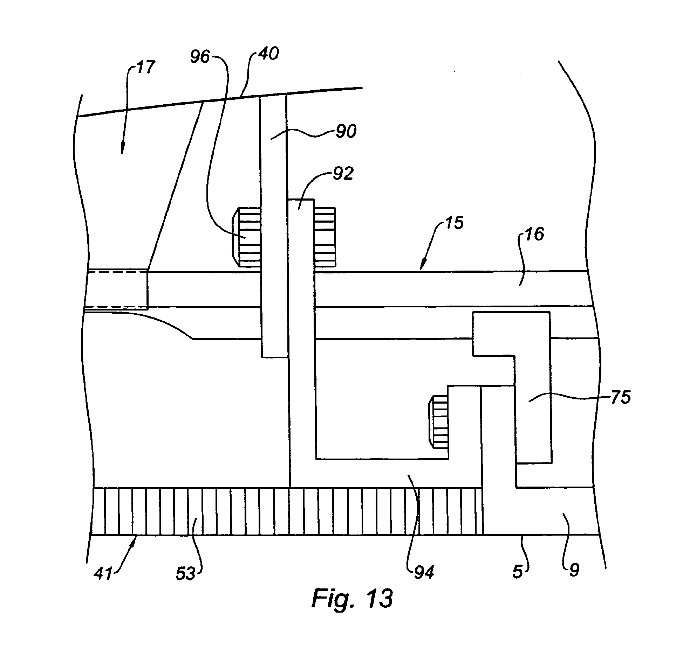

Selon le mode de réalisation représenté à la figure 13, le panneau externe 40 présente également un cadre avant 90 apte à être rattaché à une cloison 92 solidaire d'une partie amont, notamment d'une bride amont 94, fixée sur le carter 9. Ainsi, le panneau externe 40 est solidement rattaché à la structure médiane 5 sans que la surface de la virole acoustique 53 ne soit transpercée pour assurer la fixation du panneau externe 40. De ce fait et contrairement à la demande de brevet FR 06/08599, sensiblement la totalité de la surface acoustique du panneau interne 41 est utile et permet d'atténuer les nuisances acoustiques dues au fonctionnement du turboréacteur.

Le cadre avant 90 est sensiblement périphérique tout comme la cloison 92. Le cadre avant 90 est apte à être fixé contre la cloison 92 à l'aide d'éléments de fixation 96 tels qu'un système boulons/écrous. Le panneau externe 40 est de ce fait rattaché de manière amovible à la cloison 92. Le panneau externe 40 intégrant la lèvre d'entrée d'air 4a forme donc conformément à l'invention une partie amovible destinée à être rapportée sur la partie fixe et plus particulièrement sur la cloison 92.

Selon un mode de réalisation préférentiel, la cloison 92 comporte une ouverture configurée pour que les moyens de guidage 15 traversent ladite ouverture. Ainsi, la longueur de recul de la structure d'entrée d'air 4 est augmentée.

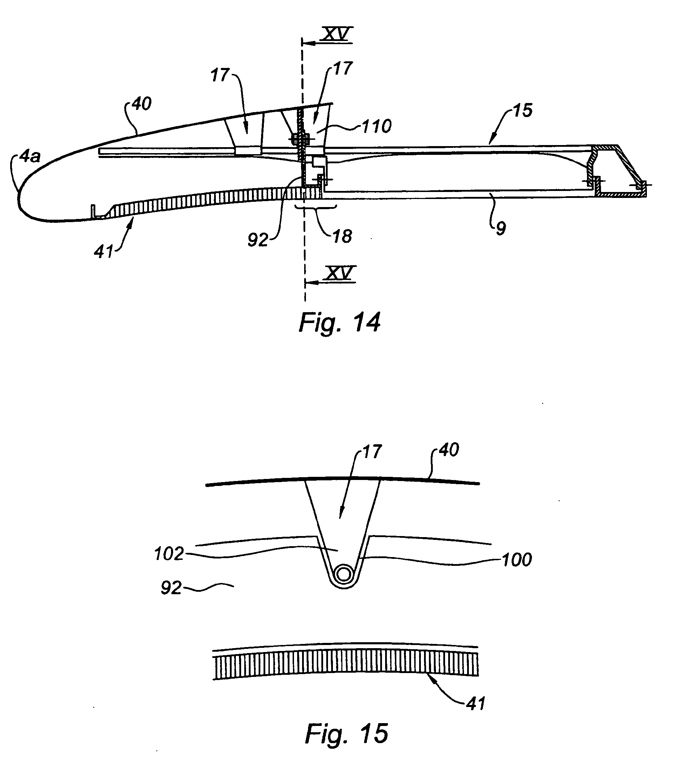

L'étanchéité entre la zone aval et amont de part et d'autre de la cloison 92 peut être assurée par exemple par un joint feu entre la cloison 92 et les moyens de montage 17. Selon un mode de réalisation préféré représenté aux figures 14 et 15, la cloison 92 comporte un évidement 100 de forme complémentaire à au moins une partie 102 des moyens de montage 17 pour que, en position de fermeture, les moyens de montage 17 assurent l'étanchéité de la cloison 92. Tout joint connu de l'homme du métier peut être intercalé entre les moyens de montage 17 et la cloison 92. Selon le mode de réalisation représenté à la figure 15, au moins une partie 110 des moyens de montage 17 comporte une section s'étendant vers l'aval et chevauchant la cloison 92 et la zone de jonction 18.

De même, l'étanchéité de la fixation entre le cadre avant 90 du panneau externe 40 et la cloison 92 est, par exemple, assurée à l'aide d'un joint périphérique.

La cloison 92 peut porter des centreurs (non représentés) s'étendant perpendiculairement à ladite cloison 92 vers l'amont de la nacelle 1 de l'invention. Ces centreurs remplissent également une fonction de guidage qui détermine la longueur de ces centreurs.

Le cadre avant 90 présente de plus des ouvertures (non représentées) aptes à permettre le passage des éléments de fixation 96 ainsi que d'éventuels centreurs lorsque le panneau externe 40 est correctement positionné et en position de fermeture.

Les panneaux interne 41 et externe 40 peuvent également comporter des renforts internes (non représentés) afin de d'apporter plus de rigidité auxdits panneaux. Ces renforts internes sont choisis de sorte à avoir la raideur recherchée par l'homme du métier.

On notera également que la structure d'entrée d'air 4, peut s'étendre axialement par l'intermédiaire de son panneau externe 40 au-delà d'une bride d'attache du panneau interne 41 à la structure fixe de la nacelle 1 de l'invention pour avoisiner la structure externe d'une structure d'inversion de poussée appartenant à la section aval 6 de la nacelle 1 et éventuellement recouvrir les capots 13. Un système de verrous peut alors être prévu pour maintenir la structure d'entrée d'air 4 sur la cloison 92 solidaire de la structure du carter 9 ou d'une structure amont de la section aval 6.

Selon un mode de réalisation préférentiel non représenté, la structure d'entrée d'air 4 comporte des équipements de dégivrage de la structure d'entrée d'air 4. Lesdits équipements de dégivrage étant situés sensiblement sur la lèvre 4a ou intégrés dans la lèvre 4a. De même, les panneaux internes 41 et externes 40 peuvent comporter des éléments électriques de dégivrage (non représentés). Dans ce cas, il sera avantageux de prévoir une interface de raccordement d'une alimentation électrique, par exemple sur le cadre avant 90 du panneau externe ou sur la cloison 92 de la bride.

## Revendications

1. Nacelle (1) pour turboréacteur comprenant :
- une structure d'entrée d'air (4) apte à canaliser un flux d'air vers une soufflante du turboréacteur et comprenant au moins un panneau externe (40) longitudinal intégrant une lèvre d'entrée d'air (4a),
- une structure médiane (5) destinée à entourer ladite soufflante et à laquelle est rattachée la structure d'entrée d'air (4) de manière à assurer une continuité aérodynamique,
- au moins un panneau interne (41) comprenant une virole acoustique (53), fixée à son extrémité aval (70) à une extrémité amont (72) de la structure médiane (5) formant avec cette dernière une structure fixe de la nacelle (1), et
- des moyens de guidage (15) du ou des panneaux externes (40) aptes à permettre un déplacement sensiblement rectiligne du panneau externe (40) vers l'amont de la nacelle (1) de manière à pouvoir ouvrir la structure d'entrée d'air (4),
**caractérisée en ce que** les moyens de guidage (15) sont entièrement fixés sur la structure médiane (5).

2. Nacelle (1) selon la revendication 1, **caractérisée en ce que** les moyens de guidage (15) sont fixés sur un carter (9) de la structure médiane (5), ledit carter (9) étant destiné à entourer la soufflante et à assurer la continuité aérodynamique avec le panneau interne (41).

3. Nacelle (1) selon la revendication précédente **caractérisée en ce que** l'extrémité amont (72) du carter (9) comportent une pluralité d'orifices pour adapter la fixation des moyens de guidage (15) selon le positionnement desdits moyens de guidage (15).

4. Nacelle (1) selon l'une quelconque des revendications précédentes, **caractérisée en ce que** les moyens de guidage (15) comprennent au moins un système de rails (16, 32, 34, 47) et des moyens de montage (17, 20, 30, 31, 36, 45) du ou des panneaux externes (40) sur le ou les système(s) de rails (16,32, 34, 47).

5. Nacelle (1) selon la revendication précédente, **caractérisée en ce qu'**au moins une partie des moyens de montage (20) est située en aval de la zone de jonction (18) de la structure médiane (5) et d'un ou de plusieurs panneaux internes (41), en position de fermeture.

6. Nacelle (1) selon la revendication 4 ou 5, **caractérisée en ce que** les moyens de montage comprennent au moins un coulisseau (30, 31) apte à coopérer avec au moins un rail (32) correspondant.

7. Nacelle (1) selon l'une quelconque des revendications 4 ou 5, **caractérisée en ce que** les moyens de montage comprennent au moins un système de patins à rouleaux (45) aptes à coopérer avec un rail (47) correspondant.

8. Nacelle (1) selon l'une quelconque des revendications 4 ou 5, **caractérisée en ce que** les moyens de montage comprennent un système de glissière (36) apte à coopérer avec au moins un rail en rigole (34) correspondant.

9. Nacelle (1) selon l'une quelconque des revendications précédentes, **caractérisée en ce que** les moyens de guidage (15) comportent un évidement (50) sensiblement transversal par rapport à l'axe (52) de la nacelle (1), ledit évidement (50) étant situé en aval du ou des panneau(x) interne(s) (41).

10. Nacelle (1) selon l'une quelconque des revendications précédentes, **caractérisé en ce que** au moins un panneau externe (40) présente un cadre avant (90) apte à être rattaché à une cloison (92) solidaire d'une partie fixée (94) sur la structure médiane (5).

11. Nacelle (1) selon la revendication précédente, **caractérisée en ce que** la cloison (92) comporte une ouverture configurée pour que les moyens de guidage (15) traversent ladite ouverture.

12. Nacelle selon l'une quelconque des revendications 10 ou 11, **caractérisée en ce que** la cloison (92) comporte un évidement (100) de forme complémentaire à au moins une partie (102) des moyens de montage (17) pour que, en position de fermeture, les moyens de montage (17) assurent l'étanchéité de la cloison (92).

13. Nacelle (1) selon l'une quelconque des revendications précédentes, **caractérisée en ce que** la structure d'entrée d'air (4) comprend des moyens d'accompagnement mécaniques ou manuels d'au moins un panneau externe (40) le long des moyens de guidage (15).

14. Nacelle (1) selon la revendication précédente, **caractérisée en ce que** les moyens de guidage (15) comportent au moins un moyen de butée d'au moins un panneau externe (40) apte à permettre une ouverture partielle dudit ou desdits panneaux externes (40).

15. Nacelle (1) selon l'une quelconque des revendications précédentes, **caractérisé en ce que** la structure médiane (5) comprend des moyens de centrage et de positionnement des moyens de guidage (15).

16. Nacelle (1) selon l'une quelconque des revendications précédentes, **caractérisée en ce que** la structure d'entrée d'air (4) comprend des équipements de dégivrage de la structure d'entrée d'air (4).

## Claims

1. A turbojet engine nacelle (1) comprising:
- an air intake structure (4) able to channel a stream of air toward a fan of the turbojet engine and comprising at least one longitudinal external panel (40) incorporating an air intake lip (4a),
- a middle structure (5) intended to surround said fan and to which the air intake structure (4) is attached so as to ensure aerodynamic continuity,
- at least one internal panel (41) comprising an acoustic shroud (53), fastened at its downstream end (70) to an upstream end (72) of the middle structure (5), forming a structure fixed to the nacelle (1) therewith, and
- guidance means (15) for external panel(s) (40) able to allow a substantially rectilinear movement of the external panel (40) in the upstream direction of the nacelle (1) so as to be able to open the air intake structure (4),
**characterized in that** the guidance means (15) are completely fixed on the middle structure (5).

2. The nacelle (1) according to claim 1, **characterized in that** the guidance means (15) are fixed on a case (9) of the middle structure (5), said case (9) being intended to surround the fan and to ensure the aerodynamic continuity with the internal panel (41).

3. The nacelle (1) according to the preceding claim, **characterized in that** the upstream end (72) of the case (9) includes a plurality of orifices to adapt the fixing of the guidance means (15) according to the position of said guidance means (15).

4. The nacelle (1) according to any one of the preceding claims, **characterized in that** the guidance means (15) comprise at least one system of rails (16, 32, 34, 47) and mounting means (17, 20, 30, 31, 36, 45) for mounting the external panels (40) on the system(s) of rails (16, 32, 34, 47).

5. The nacelle (1) according to the preceding claim, **characterized in that** at least part of the mounting means (20) is situated downstream of the function zone (18) of the middle structure (5) and one or more internal panels (41), in the closed position.

6. The nacelle (1) according to claim 4 or 5, **characterized in that** the mounting means comprise at least one slider (30, 31) able to cooperate with at least one corresponding rail (32).

7. The nacelle (1) according to any one of claims 4 or 5, **characterized in that** the mounting means comprise at least one system of rolling skates (45) to cooperate with a corresponding rail (47).

8. The nacelle (1) according to any one of claims 4 or 5, **characterized in that** counting means comprise a guide channel system (36) able to cooperate with at least one corresponding through rail (34).

9. The nacelle (1) according to any one of the preceding claims, **characterized in that** the guidance means (15) include a recess (50) that is substantially transverse relative to the axis (52) of the nacelle (1), said recess (50) being situated downstream of the internal panel(s) (41).

10. The nacelle (1) according to any one of the preceding claims, **characterized in that** at least one external panel (40) has a front flame (90) that can be attached to a partition (92) integral with a fixed part (94) on the middle structure (5).

11. The nacelle (1) according to the preceding claim, **characterized in that** the partition (92) includes an opening configured so that the guidance means (15) pass through said opening.

12. The nacelle according to any one of claims 10 or 11, **characterized in that** the partition (92) includes a recess (100) with a shape complementary to at least part (102) of the mounting means (17) so that, in the closed position, the mounting means (17) ensure the sealing of the partition (92).

13. The nacelle (1) according to any one of the preceding claims, **characterized in that** the air intake structure (4) comprises means for mechanically or manually accompanying at least one external panel (40) along the guidance means (15).

14. The nacelle (1) according to the preceding claim, **characterized in that** the guidance means (15) include at least one stop means for at least one external panel (40) able to allow partial opening of said external panel(s) (40).

15. The nacelle (1) according to any one of the preceding claims, **characterized in that** the middle structure (5) comprises means for centering and positioning the guidance means (15).

16. The nacelle (1) according to any one of the preceding claims, **characterized in that** the air intake structure (4) comprises deicing equipment for the air intake structure (4).

## Patentansprüche

1. Gondel (1) für Turbotriebwerk, die umfasst:
- eine Lufteingangsstruktur (4), die imstande ist, einen Luftstrom zu einem Gebläse des Turbotriebwerks zu kanalisieren und mindestens eine äußere Längsplatte (40) umfasst, die eine Lufteingangslippe (4a) integriert,
- eine mittlere Struktur (5), die dazu bestimmt ist, das Gebläse zu umgeben und an die die Lufiteingangsstruktur (4) derart abgeschossen ist, dass eine aerodynamische Kontinuität gewährleistet ist,
- mindestens eine innere Platte (41), die eine akustische Einfassung (53) umfasst, die an ihrem stromaufwärtigen Ende (70) an einem stromabwärtigen Ende (72) der mittleren Struktur (5) befestigt ist und mit dieser Letztgenannten eine starre Struktur der Gondel (1) bildet, und
- Führungsmittel (15) der äußeren Platte oder Platten (40), die imstande sind, eine etwa geradlinige Verschiebung der äußeren Platte (40) in die stromaufwärtige Richtung der Gondel (1) derart zu erlauben, dass die Lufteingangsstruktur (4) geöffnet werden kann,
**dadurch gekennzeichnet, dass** die Führungsmittel (15) voll und ganz auf der mittleren Struktur (5) befestigt sind.

2. Gondel (1) nach Anspruch 1, **dadurch gekennzeichnet, dass** die Führungsmittel (15) an einem Gehäuse (9) der mittleren Struktur (5) befestigt sind, wobei das Gehäuse (9) dazu bestimmt ist, das Gebläse zu umgeben und die aerodynamische Kontinuität mit der inneren Platte (41) zu gewährleisten.

3. Gondel (1) nach vorangehendem Anspruch, **dadurch gekennzeichnet, dass** das stromabwärtige Ende (72) des Gehäuses (9) eine Vielzahl von Öffnungen aufweist, um die Befestigung der Führungsmittel (15) an die Stellung der Führungsmittel (15) anzupassen.

4. Gondel (1) nach einem der vorangehenden Ansprüche, **dadurch gekennzeichnet, dass** die Führungsmittel (15) mindestens ein Schienensystem (16, 32, 34, 47) und Montagemittel (17, 20, 30, 31, 36, 45) der externen Platte oder Platten (40) auf dem oder den Schienensystem(en) (16, 32, 34, 47) umfassen.

5. Gondel (1) nach vorangehendem Anspruch, **dadurch gekennzeichnet, dass** sich in geschlossener Stellung mindestens ein Abschnitt der Montagemittel (20) stromabwärts von der Verbindungszone (18) der mittleren Struktur (5) und von einer oder mehrerer internen Platten (41) befindet.

6. Gondel (1) nach Anspruch 4 oder 5, **dadurch gekennzeichnet, dass** die Montagemittel mindestens eine Gleitführung (30, 31) umfassen, die imstande ist, mit mindestens einer entsprechenden Schiene (32) zusammenzuarbeiten.

7. Gondel (1) nach einem der Ansprüche 4 oder 5, **dadurch gekennzeichnet, dass** die Montagemittel mindestens ein Gleitbackensystem auf Rollen (45) umfassen, die imstande sind, mit einer entsprechenden Schiene (47) zusammenzuarbeiten.

8. Gondel (1) nach einem der Ansprüche 4 oder 5, **dadurch gekennzeichnet, dass** die Montagemittel ein Gleitschienensystem (36) umfassen, das imstande ist, mit mindestens einer rinnenförmigen Schiene (34) zusammenzuarbeiten.

9. Gondel (1) nach einem der vorangehenden Ansprüche, **dadurch gekennzeichnet, dass** die Führungsmittel (15) eine zur Achse (52) der Gondel (1) etwa transversale Aussparung (50) aufweisen, wobei sich die Aussparung (50) stromabwärts gegenüber der oder den inneren Platten (41) befindet.

10. Gondel (1) nach einem der vorangehenden Ansprüche, **dadurch gekennzeichnet, dass** mindestens eine externe Platte (40) einen vorderen Rahmen (90) aufweist, der imstande ist, an eine Trennwand (92) angegliedert zu sein, die mit einem auf der mittleren Struktur (5) befestigten Abschnitt (94) verbunden ist.

11. Gondel (11) nach vorangehendem Anspruch, **dadurch gekennzeichnet, dass** die Trennwand (92) eine Öffnung aufweist, die konfiguriert ist, damit die Führungsmittel (15) die Öffnung durchqueren.

12. Gondel nach einem der Ansprüche 10 oder 11, **dadurch gekennzeichnet, dass** die Trennwand (92) eine Aussparung (100) komplementärer Form zu mindestens einem Abschnitt (102) der Montagemittel aufweist (17), damit die Montagemittel (17) in geschlossener Stellung die Dichtigkeit der Trennwand (92) gewährleisten.

13. Gondel (1) nach einem der vorangehenden Ansprüche, **dadurch gekennzeichnet, dass** die Lufteingangsstruktur (4) mechanische oder manuelle Begleitmittel mindestens einer äußeren Platte (40) entlang der Führungsmittel (15) umfasst.

14. Gondel (1) nach vorangehendem Anspruch, **dadurch gekennzeichnet, dass** die Führungsmittel (15) mindestens ein Anschlagmittel mindestens einer externen Platte (40) aufweisen, das imstande ist, eine Teilöffnung der externen Platte oder Platten (40) zu erlauben.

15. Gondel (1) nach einem der vorangehenden Ansprüche, **dadurch gekennzeichnet, dass** die mittlere Struktur (5) Zentrier- und Positioniermittel der Führungsmittel (15) umfasst.

16. Gondel (1) nach einem der vorangehenden Ansprüche, **dadurch gekennzeichnet, dass** die Lufteingangsstruktur (4) Enteisungsausrüstungen der Lufteingangsstruktur (4) umfasst.
